# EUROPÄISCHE PATENTSCHRIFT

(11) **EP 3 685 214 B1**
(45) Veröffentlichungstag und Bekanntmachung des Hinweises auf die Patenterteilung: **17.11.2021**
(21) Anmeldenummer: 18779583.6
(22) Anmeldetag: 19.09.2018
(51) Int. Cl.: G02B 27/01

(54) **ANZEIGEVORRICHTUNG UND KRAFTFAHRZEUG ZUM ANZEIGEN EINES BILDS MIT EINER FOLIE ZUM ANZEIGEN EINES BILDS MIT WENIGSTENS EINER WEITEREN ELEKTRISCHEN KOMPONENTE**
DISPLAY DEVICE AND MOTOR VEHICLE FOR DISPLAYING AN IMAGE, HAVING A FILM TO DISPLAY AN IMAGE, HAVING AT LEAST ONE FURTHER ELECTRICAL COMPONENT
DISPOSITIF D'AFFICHAGE DESTINÉ À L'AFFICHAGE D'UNE IMAGE ET COMPRENANT UN FILM INTÉGRANT AU MOINS UN AUTRE COMPOSANT ÉLECTRIQUE, ET VÉHICULE À MOTEUR

(30) Priorität: 22.09.2017 DE 102017216845
(43) Veröffentlichungstag der Anmeldung: 29.07.2020
(73) Patentinhaber: Audi AG, 85045 Ingolstadt (DE)
(72) Erfinder: SCHWARTZE, Sebastian, 85049 Ingolstadt (DE); KLUG, Markus, 85057 Ingolstadt (DE); SCHWAGER, André, 38871 Ilsenburg (DE); KEZZE, Muhammad Ali, 52068 Aachen (DE)
(86) Internationale Anmeldenummer: PCT/EP2018/075382
(87) Internationale Veröffentlichungsnummer: WO 2019/057788

(56) Entgegenhaltungen:
- EP-A2- 3 006 239
- WO-A1-2016/142579
- DE-A1-102014 005 976
- US-A1- 2005 084 659
- US-B1- 6 654 070
- YANG CHIH-JEN ET AL: "Organic light-emitting devices integrated with solar cells: High contrast and energy recycling", APPLIED PHYSICS LETTERS, A I P PUBLISHING LLC, US, Bd. 90, Nr. 17, 25. April 2007 (2007-04-25), Seiten 173507-173507, XP012094420, ISSN: 0003-6951, DOI: 10.1063/1.2732181

## Beschreibung

### BESCHREIBUNG:

Die Erfindung betrifft eine Anzeigevorrichtung zum Anzeigen eines Bilds mit zumindest einem semitransparenten Trägerelement. Ferner betrifft die Erfindung ein Kraftfahrzeug.

Aus dem Stand der Technik sind bereits Anzeigevorrichtungen bekannt, welche einen Projektor aufweisen. In dem Projektor selbst können dann elektrische Komponenten zum Anzeigen eines Bilds beziehungsweise Aufnehmen einer Umgebung angeordnet sein. Des Weiteren sind aus dem Stand der Technik bildgebende Folien, insbesondere bei volumenholographischen Displays, bekannt, bei welchen weitere elektrische Komponenten der Anzeigevorrichtung separat verbaut und entsprechend ausgerichtet werden müssen. Insbesondere ist es sehr zeitaufwändig, die entsprechenden elektrischen Komponenten auszurichten und anzuschließen. Ein so zusammengestelltes System ist insbesondere mit hohen Kosten verbunden und anfällig für mechanische Verformung und/oder eine Bewegung der einzelnen Komponenten zueinander.

Aus der DE102014005976 A1 sind eine transparenten Anzeigefläche sowie eine LCD-Folie mit einstellbarem Transmissionsgrad bekannt, welche in die Windschutzscheibe eines Fahrzeugs integriert sind.

Aufgabe der vorliegenden Erfindung ist es eine Anzeigevorrichtung sowie ein Kraftfahrzeug zu schaffen, mittels welcher beziehungsweise mittels welchem ein zuverlässiger Betrieb der Anzeigevorrichtung realisiert werden kann. Diese Aufgabe wird durch eine Anzeigevorrichtung sowie durch ein Kraftfahrzeug gemäß den unabhängigen Ansprüchen gelöst.

Ein Aspekt der Erfindung betrifft eine Anzeigevorrichtung zum Anzeigen eines Bilds. Die Anzeigevorrichtung weist zumindest ein semitransparentes Trägerelement auf. Auf dem Trägerelement ist zumindest bereichsweise eine Folie zum zumindest bereichsweisen Anzeigen des Bilds angeordnet. In die Folie ist zumindest eine weitere elektrische Komponente der Anzeigevorrichtung integriert.

Dadurch ist es möglich, dass die Anzeigevorrichtung als ein Bauteil bereitgestellt werden kann und beispielsweise eine leichte Wartung und/oder eine leichte Montage der Anzeigevorrichtung durchgeführt werden kann. Des Weiteren ist keine Bewegung beziehungsweise kein Versatz der einzelnen Komponenten zueinander möglich, weshalb eine komplizierte Justierung ebenfalls entfällt. Insbesondere kann weiterhin realisiert werden, dass durch das "geschlossene System" die Anzeigevorrichtung verbessert vor Umwelteinflüssen, wie beispielsweise Schmutz oder Wasser, geschützt ist. Insbesondere ist es ebenfalls möglich, dass eine Wärmeableitung über beispielsweise das Trägerelement durchgeführt werden kann. Aufgrund der Integration der zumindest einen weiteren elektrischen Komponente kann eine verbesserte Raumausnutzung sowie eine verbesserte Reflexion insbesondere in der Folie geschaffen werden. Somit ist durch die Integration der zumindest einen weiteren elektrischen Komponente in die Folie ein zuverlässiger Betrieb der Anzeigevorrichtung realisiert.

Es ist möglich, dass das Trägerelement und die Folie in einer Sandwichbauweise ausgebildet sind. Mit anderen Worten können das Trägerelement und die Folie beispielsweise aufeinander geklebt sein. Ebenfalls möglich ist, dass die Folie von zwei Trägerelementen eingeschlossen ist. Auch hier kann somit eine Sandwichbauweise realisiert werden. Insbesondere ist es dadurch ermöglicht, dass die Folie verbessert vor Umwelteinflüssen geschützt ist. Des Weiteren kann beispielsweise bei dieser Sandwichbauweise ebenfalls eine Schutzschicht mit eingezogen werden kann, sodass die Anzeigevorrichtung, insbesondere das semitransparente Trägerelement, als eine Art Sicherheitsscheibe bereitgestellt werden, wodurch insbesondere die Anzeigevorrichtung im Kraftfahrzeugbau als eine Scheibe des Kraftfahrzeugs genutzt werden kann. Gemäß der Erfindung weist die Folie und/oder das Trägerele-ment eine weitere LCD-Folie auf, wodurch mittels der LCD-Folie eine Abschattung durchgeführt werden kann, sodass das angezeigte Bild verbessert durch eine Person wahrnehmbar ist. Bevorzugt kann weiterhin vorgesehen sein, dass die LCD-Folie mit auf einem Trägerelement angeordnet ist, welche pixelweise abdunkelbar ist, so dass Tiefeninformationen der Folie verbessert durch die Person wahrnehmbar ist. Insbesondere können durch die LCD-Folie nur die Bereiche abgedunkelt werden, auf welchen auch ein Bild beziehungsweise Teile des Bilds dargestellt sind, so dass durch die Bereiche, wo kein Bild dargestellt ist, weiterhin durch die Person hindurchgesehen werden kann. Insbesondere kann vorgesehen sein, dass das angezeigte Bild als erweiterte Realität dargestellt werden kann. Mit anderen Worten kann eine Person, welche das Bild sieht, ebenfalls die Umgebung der Anzeigevorrichtung durch das zumindest semitransparente Trägerelement wahrnehmen. Das Bild wird auf der Folie angezeigt und die Umgebung hinter der Folie ist dennoch von der Person wahrnehmbar. Insbesondere können dadurch beispielsweise Informationen über die Umgebung, beispielsweise eine Temperatur oder eine Geschwindigkeit des Kraftfahrzeugs als erweiterte Realität angezeigt werden. Es kann weiterhin insbesondere vorgesehen sein, dass das angezeigte Bild ein dreidimensionales Bild ist. Somit kann als Bild ein Hologramm dargestellt werden. Beispielsweise können hierzu mehrere Folien zum Anzeigen eines Bilds verwendet werden, um einen Tiefeneffekt und dadurch ein dreidimensionales Bild zu erzeugen. Ferner kann auch ein Volumenhologramm für den Tiefeneffekt benutzt werden. Die Folie mit der zumindest einen weiteren elektrischen Komponente ist insbesondere einstückig ausgebildet. Insbesondere kann vorgesehen sein, dass in die Folie die zumindest eine weitere elektrische Komponente vergossen beziehungsweise gepresst ist. Dadurch kann die Anzeigevorrichtung für einen Kraftfahrzeugbau bereitgestellt werden, und muss lediglich beispielsweise an ein Kraftfahrzeugbauteil angeordnet werden. Ein kompliziertes Montageverfahren zum Anbringen beziehungsweise Anordnen der Anzeigevorrichtung entfällt dadurch.

Gemäß einer vorteilhaften Ausgestaltungsform kann eine Kamera der Anzeigevorrichtung zum Erfassen einer Umgebung der Anzeigevorrichtung als eine weitere elektrische Komponente in der Folie integriert sein. Insbesondere kann dadurch die Folie auch als bildaufnehmende Folie ausgestaltet sein und die Umgebung der Anzeigevorrichtung dadurch erfassen. Insbesondere können beispielsweise Bewegungen einer Person vor der Anzeigevorrichtung durch die Kamera erfasst werden, sodass beispielsweise auch eine Bedienung der Anzeigevorrichtung oder weiteren Komponenten, beispielsweise eines Kraftfahrzeugs, mittels der Anzeigevorrichtung realisiert werden kann. Dadurch kann ein zuverlässiger und verbesserter Betrieb der Anzeigevorrichtung mit der Kamera als weitere elektrische Komponente realisiert werden.

Ebenfalls vorteilhaft ist, wenn eine Lichtquelle der Anzeigevorrichtung zum Erzeugen von Lichtstrahlen für die Folie als eine weitere elektrische Komponente in der Folie integriert ist. Beispielsweise kann über Reflexion und/oder Brechung und/oder Beugung in der Folie die erzeugten Lichtstrahlen von der Lichtquelle in den bildgebenden Bereich der Folie geleitet werden, sodass ein volumenholographisches Display ausgebildet ist. Dadurch kann die Lichtquelle zuverlässig innerhalb der Folie angeordnet werden, sodass ein zuverlässigerer Betrieb und eine einfache Montage der Anzeigevorrichtung realisiert werden kann.

Des Weiteren ist eine Steuerungseinrichtung der Anzeigevorrichtung zum Steuern der Anzeigevorrichtung als eine weitere elektrische Komponente in der Folie integriert .

Mittels der Steuerungseinrichtung können beispielsweise Informationen das Bild betreffend verarbeitet werden und beispielsweise entsprechende Steuersignale für eine Lichtquelle bereitgestellt werden, sodass das Bild entsprechend auf der Folie angezeigt werden kann. Ebenfalls möglich ist, dass mittels der Steuerungseinrichtung beispielsweise Informationen einer Kamera, welche eine Umgebung der Anzeigevorrichtung erfasst, entsprechend verarbeitet werden können. Es ist die Folie mit der Steuerungseinrichtung bereitgestellt, wodurch ein zuverlässigerer Betrieb und eine vereinfachte Montage der Anzeigevorrichtung realisiert ist.

Ferner ist zumindest ein elektrisches Energieversorgungselement einer elektrischen Energieversorgung der Anzeigevorrichtung zum Versorgen der Anzeigevorrichtung mit elektrischer Energie als eine weitere elektrische Komponente in der Folie integriert .

Dadurch ist es ermöglicht, dass die Anzeigevorrichtung auch mit einem integrierten Energieversorgungselement ausgestattet ist, sodass die Anzeigevorrichtung die elektrische Energie, die diese benötigt, durch das integrierte Energieversorgungselement erhält. Insgesamt kann dadurch ein zuverlässiger Betrieb und eine vereinfachte Montage der Anzeigevorrichtung realisiert werden.

Als das zumindest eine elektrische Energieversorgungselement ist zumindest Solarzellenelement in der Folie zur elektrischen Energieerzeugung der Anzeigevorrichtung integriert . Insbesondere kann dadurch mittels Sonnenlichtstrahlen elektrische Energie erzeugt werden, welche zum Betrieb der Anzeigevorrichtung genutzt werden kann. Insbesondere kann dadurch unabhängig von einer externen Energiequelle der Anzeigevorrichtung die Anzeigevorrichtung betrieben werden. Es kann weiterhin vorgesehen sein, dass elektrische Leitungen als nochmals weitere elektrische Komponenten beispielsweise zur Energieübertragung vom Solarzellenelement zur Folie ebenfalls mit in der Folie integriert sind. Dadurch kann die Anzeigevorrichtung als ein energieautarkes Bauteil bereitgestellt werden, ohne dass zusätzliche elektrische Energieversorgungselemente an der Anzeigevorrichtung verbaut werden müssen beziehungsweise anzeigevorrichtungsexterne Energieversorgungselemente bereitgestellt werden müssen. Dadurch kann ein zuverlässiger und energieautarker Betrieb mit weniger Montageaufwand der Anzeigevorrichtung realisiert werden.

Gemäß einer weiteren vorteilhaften Ausgestaltungsform kann zumindest ein Induktionselement und/oder ein elektrisches Kontaktelement als das zumindest eine elektrische Energieversorgungselement in der Folie integriert sein, wobei mittels des Induktionselements elektrische Energie von einem weiteren Induktionselement empfangbar ist und/oder mittels des elektrischen Kontaktelements elektrische Energie von einem weiteren Kontaktelement empfangbar ist. Insbesondere kann vorgesehen sein, dass das weitere Induktionselement und/oder das weitere Kontaktelement an einer Koppelstelle zwischen der Anzeigevorrichtung und einem Anbauteil, welches insbesondere ein Kraftfahrzeugbauteil sein kann, ausgebildet ist. Entsprechende elektrische Leitungen für die Anzeigevorrichtung können ebenfalls in der Folie als nochmals weitere elektrische Komponenten integriert sein. Dadurch ist eine vereinfachte Energieübertragung an die Anzeigevorrichtung ermöglicht, sodass die Anzeigevorrichtung zuverlässig betrieben werden kann.

Ferner hat es sich als vorteilhaft erwiesen, wenn eine Kommunikationseinrichtung der Anzeigevorrichtung zum Empfangen, insbesondere zum drahtlosen Empfangen, von Informationen zumindest über das Bild als eine weitere elektrische Komponente in der Folie integriert ist. Beispielsweise kann es sich bei der Kommunikationseinrichtung um ein Datenempfangselement handeln, mittels welchem die Informationen über zumindest das Bild empfangen werden können. Beispielsweise kann dies über Bluetooth und/oder WiFi und/oder über optische Kommunikationseinrichtungen erfolgen. Insbesondere können mittels der Kommunikationseinrichtung auch weitere Informationen empfangen werden, beispielsweise Informationen über eine Geschwindigkeit des Kraftfahrzeugs oder eine Umgebungstemperatur, welche dann auch im Bild, beispielsweise als erweiterte Realität, mit dargestellt werden können. Ebenfalls möglich ist, dass mittels der Kommunikationseinrichtung Informationen der Anzeigevorrichtung, beispielsweise erfasste Informationen einer Kamera der Anzeigevorrichtung oder ein Betriebsstatus der Anzeigevorrichtung, an eine anzeigevorrichtungsexterne Einrichtung mittels eines Netzwerks übermittelt werden können. Dadurch kann aufwandsreduziert die Anzeigevorrichtung bereitgestellt werden, sodass ein zuverlässiger Betrieb der Anzeigevorrichtung realisiert werden kann.

Ein weiterer Aspekt der Erfindung betrifft ein Kraftfahrzeug mit zumindest einer Anzeigevorrichtung nach einem der vorhergehenden Aspekte. Das Kraftfahrzeug ist insbesondere als Personenkraftwagen ausgebildet.

In einer vorteilhaften Ausgestaltungsform des Kraftfahrzeugs kann das Trägerelement der Anzeigevorrichtung als zumindest eine Windschutzscheibe des Kraftfahrzeugs ausgebildet sein. Insbesondere kann dann die Scheibe als Anbauteil eines Kraftfahrzeugbauteils bereitgestellt werden. Beispielsweise kann das Kraftfahrzeugbauteil ein Armaturenbrett sein.

Die Windschutzscheibe kann dann insbesondere am Armaturenbrett angeordnet werden, wobei insbesondere am Armaturenbrett, insbesondere an einer Koppelstelle mit der Scheibe, entsprechende Kopplungskomponenten verbaut sind, um einen zuverlässigen Betrieb der Anzeigevorrichtung am Kraftfahrzeugbauteil realisieren zu können.

Vorteilhafte Ausgestaltungsformen der Anzeigevorrichtung sind als vorteilhafte Ausgestaltungsformen des Kraftfahrzeugs anzusehen. Aus diesem Grund sind die entsprechenden Weiterbildungen des erfindungsgemäßen Kraftfahrzeugs hier nicht noch einmal beschrieben.

Im Folgenden sind Ausführungsbeispiele der Erfindung beschrieben. Hierzu zeigt:
- Fig. 1: eine schematische Perspektivansicht einer Ausführungsform einer Anzeigevorrichtung mit einer Mehrzahl von integrierten elektrischen Komponenten;
- Fig. 2: eine weitere schematische Perspektivansicht einer Ausfüh-rungsform der Anzeigevorrichtung mit einer Mehrzahl von inte-grierten elektrischen Komponenten; und
- Fig. 3: eine schematische Perspektivansicht einer Ausführungsform eines Ausschnitts eines Kraftfahrzeugs mit einer Ausführungs-form der Anzeigevorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

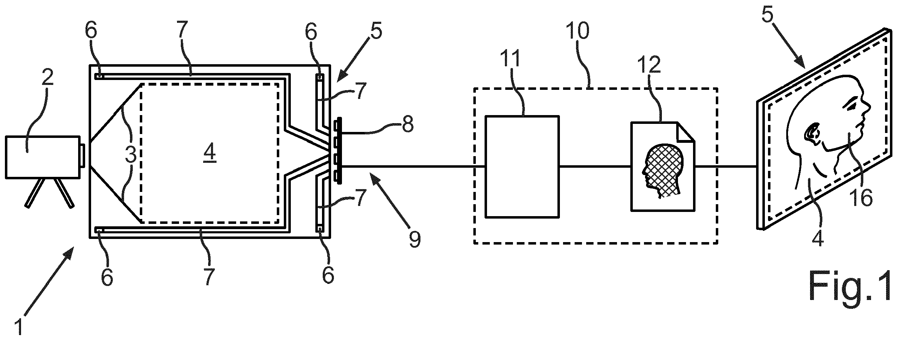

Fig. 1 zeigt eine schematische Perspektivansicht einer Ausführungsform einer Anzeigevorrichtung 1. Die Anzeigevorrichtung 1 weist eine Lichtquelle 2 auf, mittels welcher Lichtstrahlen 3 auf eine bildgebende Fläche 4 einer Folie 5 projiziert werden können.

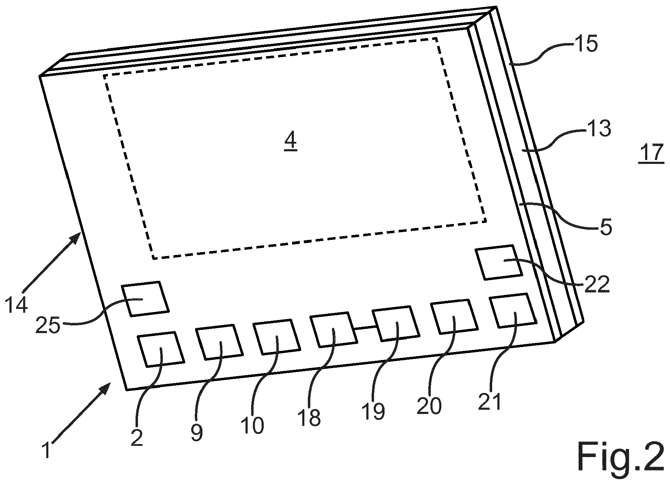

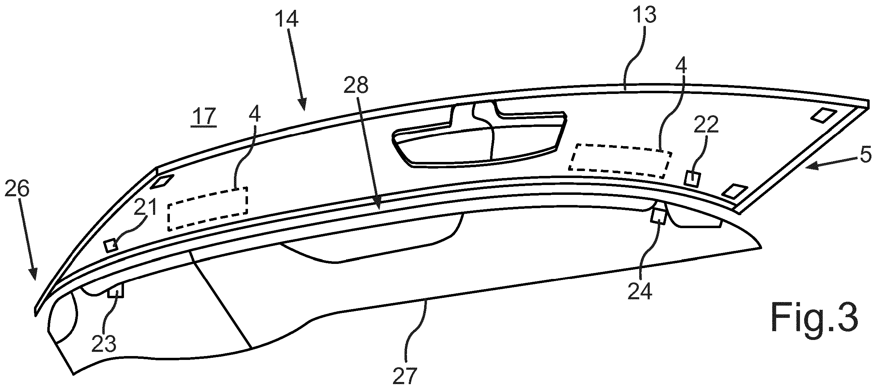

Die Folie 5 ist im vorliegenden Ausführungsbeispiel insbesondere quadratisch dargestellt. In den jeweiligen Ecken der Folie 5 sind Kameraelemente 6 angeordnet, welche über Lichtwellenleiter 7 erfasste Lichtstrahlen zu einer Kameraeinrichtung 8 der Anzeigevorrichtung 1 übertragen. Insbesondere bilden die Kameraelemente 6 und die Kameraeinrichtung 8 eine Kamera 9. Mittels der Kamera 9 kann eine Umgebung 17 (Fig. 2) der Anzeigevorrichtung erfasst werden. Beispielsweise können Bewegungen einer Person durch die Kamera 9 erfasst werden, wobei mittels der Bewegungen die Anzeigevorrichtung 1 und/oder weitere Komponenten eine Kraftfahrzeugs 26 (Fig. 3) bedient werden können.

Ferner kann die Anzeigevorrichtung 1 eine Steuerungseinrichtung 10 aufweisen, mittels welcher die Anzeigevorrichtung 1 gesteuert werden kann. Beispielsweise können hier von der Kamera 9 die Informationen zu einer Rechnereinheit 11 der Steuerungseinrichtung 10 gesendet werden, welche dann in einer bildgebenden Einheit 11 beispielsweise ein dreidimensionales Bildmodell erstellt. Dieses Modell kann dann wiederum als ein Bild 16 auf der Folie 5, insbesondere im bildgebenden Bereich 4, dargestellt werden.

Das Bild 16 kann insbesondere als erweiterte Realität dargestellt werden, sodass die Umgebung 17 der Anzeigevorrichtung 1 und das Bild 16 durch eine Person wahrnehmbar sind. Das Bild 16 kann insbesondere als dreidimensionales Bild 16, insbesondere als Hologramm, dargestellt werden.

Fig. 2 zeigt eine weitere schematische Perspektivansicht einer Ausführungsform der Anzeigevorrichtung 1. Die Folie 5 ist auf einem Trägerelement 13 angeordnet, welches insbesondere semitransparent ausgebildet ist. Die Folie 5 kann insbesondere bereichsweise auf dem Trägerelement 13 angeordnet sein. Es ist vorgesehen, dass in die Folie 5 zumindest eine weitere elektrische Komponente 2, 9, 10, 18, 19, 20, 21, 22, 25 der Anzeigevorrichtung 1 integriert ist.

Insbesondere kann das Trägerelement 13 in einer Sandwichbauweise ausgebildet sein, sodass beispielsweise auf der Folie 5 ein weiteres Trägerelement angeordnet sein kann. Insbesondere kann dann die Anzeigevorrichtung 1 als eine Scheibe 14 eines Kraftfahrzeugs 26 (Fig. 3) ausgebildet sein. Insbesondere kann beispielsweise die Scheibe 14 aus einem Sicherheitsglas bestehen, sodass diese für den Kraftfahrzeugbau geeignet ist.

Ferner kann vorgesehen sein, dass an dem Trägerelement 13 und/oder an der Folie 5 eine LCD-Folie 15 angeordnet ist und eine Abschattung generieren kann, sodass verbessert das Bild 16 auf dem bildgebenden Bereich 4 dargestellt werden kann beziehungsweise verbessert durch die Person wahrnehmbar ist. Bevorzugt kann weiterhin vorgesehen sein, dass die LCD-Folie 15 mit auf einem Trägerelement 13 angeordnet ist, welche pixelweise abdunkelbar ist, so dass Tiefeninformationen der Folie 5 verbessert durch die Person wahrnehmbar ist. Insbesondere können durch die LCD-Folie 15 nur die Bereiche abgedunkelt werden, auf welchen auch ein Bild 16 beziehungsweise Teile des Bilds 16 dargestellt sind, so dass durch die Bereiche, wo kein Bild 16 dargestellt ist, weiterhin durch die Person hindurchgesehen werden kann.

Fig. 2 zeigt weiterhin, dass zumindest ein elektrisches Energieversorgungselement 18 einer elektrischen Energieversorgung 19 der Anzeigevorrichtung 1 zum Versorgen der Anzeigevorrichtung 1 mit elektrischer Energie mit in der Folie 5 integriert sein kann.

Ferner kann vorgesehen sein, dass zumindest ein Solarzellenelement 20 als das zumindest eine elektrische Energieversorgungselement 18 in der Folie 5 zur elektrischen Energieversorgung der Anzeigevorrichtung 1 integriert ist.

Ferner kann vorgesehen sein, dass zumindest ein Induktionselement 21 und/oder ein elektrisches Kontaktelement 22 als das zumindest eine elektrische Energieversorgungselement 18 in der Folie 5 integriert ist. Mittels des Induktionselements 21 kann elektrische Energie von einem weiteren Induktionselement 23 (Fig. 3) empfangen werden und/oder mittels des elektrischen Kontaktelements 22 kann elektrische Energie von einem weiteren Kontaktelement 24 (Fig. 3) empfangbar sein.

Ferner kann die Folie 5 eine Kommunikationseinrichtung 25 zum Empfangen, insbesondere zum drahtlosen Empfangen, beispielsweise mittels Bluetooth oder WiFi, von Informationen zumindest über das Bild 16 aufweisen, wobei die Kommunikationseinrichtung 25 zumindest in der bereichsweise Folie 5 integriert ist. Es ist weiterhin möglich, dass mittels der Kommunikationseinrichtung 25, insbesondere drahtlos, weitere Informationen, beispielsweise von der Kamera 9 und/oder ein Betriebsstatus der Anzeigevorrichtung 1, an eine weitere Komponente, beispielsweise des Kraftfahrzeugs, übertragen werden können.

Fig. 3 zeigt eine weitere schematische Perspektivansicht einer Ausführungsform eines Ausschnitts eines Kraftfahrzeugs 26. Das Kraftfahrzeug 26 weist vorliegend die Anzeigevorrichtung 1 und ein Kraftfahrzeugbauteil 27 auf. Ferner ist das Trägerelement 13 als Scheibe 14, insbesondere als Windschutzscheibe, ausgebildet. An einer Koppelstelle 28 der Scheibe 14 mit dem Kraftfahrzeugbauteil 27 können insbesondere das weitere Induktionselement 23 und das weitere Kontaktelement 24 angeordnet sein, sodass elektrische Energie an die Anzeigevorrichtung 1 übertragen werden kann. Es können auch weitere Elemente zur Steuerung beziehungsweise Informationsübertragung an die beziehungsweise von der Anzeigevorrichtung an dem Kraftfahrzeugbauteil 27, insbesondere an der Koppelstelle 28 angeordnet sein.

Insgesamt zeigen die Beispiele, wie durch die Erfindung die Integration der bildgebenden Elemente und Elektronik in die Scheibe ermöglicht ist.

## Patentansprüche

1. Anzeigevorrichtung (1) zum Anzeigen eines Bilds (16), mit einem zumindest semitransparenten Trägerelement (13), welches als Windschutzscheibe eines Kraftfahrzeugs (26) ausgebildet ist, auf welchem zumindest bereichsweise eine Folie (5) zum zumindest bereichsweisen Anzeigen des Bilds (16) angeordnet ist, in welche wenigstens eine weitere elektrische Komponente (2, 9, 10, 18, 19, 20, 21, 22, 25) der Anzeigevorrichtung (1) integriert ist, wobei die bildgebende Folie (5) und/oder das Trägerelement (13) zur Abschattung eine LCD-Folie (15) aufweisen, wobei die LCD-Folie (15) zum Abschatten im Bereich des angezeigten Bilds (16) ausgebildet ist,
**dadurch gekennzeichnet, dass** zumindest ein elektrisches Energieversorgungselement (18) einer elektrische Energieversorgung (19) der Anzeigevorrichtung (1) zum Versorgen der Anzeigevorrichtung (1) mit elektrischer Energie als eine weitere elektrische Komponente (2, 9, 10, 18, 19, 20, 21, 22, 25) in der Folie (5) integriert ist, wobei zumindest ein Solarzellenelement (20) als das zumindest eine elektrische Energieversorgungselement (18) in der Folie (5) zur elektrischen Energieerzeugung der Anzeigevorrichtung (1) integriert ist, und eine Steuerungseinrichtung (10) der Anzeigevorrichtung (1) zum Steuern der Anzeigevorrichtung (1) als eine weitere elektrische Komponente (2, 9, 10, 18, 19, 20, 21, 22, 25) in der Folie (5) integriert ist, wobei zumindest die Steuerungseinrichtung (10) und das Solarzellenelement (20) außerhalb des Bereichs des angezeigten Bilds (16) in die Folie (5) integriert sind.

2. Anzeigevorrichtung (1) nach Anspruch 1, wobei eine Lichtquelle (2) der Anzeigevorrichtung (1) zum Erzeugen von Lichtstrahlen (3) für die Folie (5) als eine weitere elektrische Komponente (2, 9, 10, 18, 19, 20, 21, 22, 25) in der Folie (5) integriert ist.

3. Anzeigevorrichtung (1) nach einem der vorhergehenden Ansprüche, wobei zumindest ein Induktionselement (21) und/oder ein elektrisches Kontaktelement (22) als das zumindest eine elektrische Energieversorgungselement (18) in der Folie (5) integriert ist, wobei mittels des Induktionselements (21) elektrische Energie von einem weiteren Induktionselement (23) empfangbar ist und/oder mittels des elektrischen Kontaktelements (22) elektrische Energie von einem weiteren Kontaktelement (24) empfangbar ist.

4. Anzeigevorrichtung (1) nach einem der vorhergehenden Ansprüche, wobei eine Kommunikationseinrichtung (25) der Anzeigevorrichtung (1) zum Empfangen, insbesondere zum drahtlosen Empfangen, von Informationen zumindest über das Bild (16) als eine weitere elektrische Komponente (2, 9, 10, 18, 19, 20, 21, 22, 25) in der Folie (5) integriert ist.

5. Kraftfahrzeug (26) mit zumindest einer Anzeigevorrichtung (1) nach einem der Ansprüche 1 bis 4.

## Claims

1. Display device (1) for displaying an image (16), comprising an at least semi-transparent carrier element (13), which is configured as a windshield of a motor vehicle (26), on at least some areas of which a film (5) is arranged for displaying the image (16) in at least some areas, in which at least one further electrical component (2, 9, 10, 18, 19, 20, 21, 22, 25) of the display device (1) is integrated, wherein the imaging film (5) and/or the carrier element (13) have an LCD film (15) for shading, wherein the LCD foil (15) is configured for shading in the area of the displayed image (16), **characterised in that** at least one electrical power supply element (18) of an electrical power supply (19) of the display device (1) for supplying the display device (1) with electrical power is integrated as a further electrical component (2, 9, 10, 18, 19, 20, 21, 22, 25) into the film (5), wherein at least one solar cell element (20) is integrated into the film (5) as the at least one electrical power supply element (18) for electrical power generation of the display device (1), and **in that** a control device (10) of the display device (1) for controlling the display device (1) is integrated into the film (5) as a further electrical component (2, 9, 10, 18, 19, 20, 21, 22, 25), wherein at least the control device (10) and the solar cell element (20) are integrated into the film (5) outside the area of the displayed image (16).

2. Display device (1) according to claim 1, wherein a light source (2) of the display device (1) is integrated into the film (5) as a further electrical component (2, 9, 10, 18, 19, 20, 21, 22, 25) for producing light beams (3) for the film (5).

3. Display device (1) according to any one of the preceding claims, wherein at least one induction element (21) and/or an electric contact element (22) is integrated into the film (5) as the at least one electrical supply element (18), wherein electrical energy from a further induction element (23) can be received by means of the induction element (21) and/or electrical energy from a further contact element (24) can be received by means of the electrical contact element (22).

4. Display device (1) according to any one of the preceding claims, wherein a communication device (25) of the display device (1) is integrated into the film (5) as a further electrical component (2, 9, 10, 18, 19, 20, 21, 22, 25) for receiving, in particular wirelessly receiving, information regarding the image (16).

5. Motor vehicle (26) comprising at least one display device (1) according to any one of claims 1 to 4.

## Revendications

1. Dispositif d'affichage (1) pour l'affichage d'une image (16), avec un élément porteur (13) au moins semi-transparent, lequel est conçu en tant que pare-brise d'un véhicule automobile (26), sur lequel est disposé au moins par zones un film (5) pour l'affichage de l'image (16) au moins par zones, dans lequel au moins un composant électrique supplémentaire (2, 9, 10, 18, 19, 20, 21, 22, 25) du dispositif d'affichage (1) est intégré, dans lequel le film de formation d'image (5) et/ou l'élément porteur (13) présentent un film LCD (15) pour l'ombrage, dans lequel le film LCD (15) est conçu pour l'ombrage dans la zone de l'image affichée (16), **caractérisé en ce qu'**au moins un élément d'alimentation en énergie électrique (18) d'une alimentation en énergie électrique (19) du dispositif d'affichage (1) pour l'alimentation du dispositif d'affichage (1) en énergie électrique est intégré en tant que composant électrique supplémentaire (2, 9, 10, 18, 19, 20, 21, 22, 25) dans le film (5), dans lequel au moins un élément de cellule solaire (20) est intégré en tant qu'au moins un élément d'alimentation en énergie électrique (18) dans le film (5) pour la génération d'énergie électrique du dispositif d'affichage (1) et **en ce qu'**un appareil de commande (10) du dispositif d'affichage (1) pour la commande du dispositif d'affichage (1) est intégré en tant que composant électrique supplémentaire (2, 9, 10, 18, 19, 20, 21, 22, 25) dans le film (5), dans lequel au moins l'appareil de commande (10) et l'élément de cellule solaire (20) sont intégrés dans le film (5) hors de la zone de l'image affichée (16).

2. Dispositif d'affichage (1) selon la revendication 1, dans lequel une source de lumière (2) du dispositif d'affichage (1) servant à générer des faisceaux lumineux (3) pour le film (5) est intégrée en tant que composant électrique supplémentaire (2, 9, 10, 18, 19, 20, 21, 22, 25) dans le film (5).

3. Dispositif d'affichage (1) selon l'une quelconque des revendications précédentes, dans lequel au moins un élément d'induction (21) et/ou un élément de contact électrique (22) est intégré dans le film (5) en tant qu'au moins un élément d'alimentation en énergie électrique (18), dans lequel l'énergie électrique peut être reçue d'un élément d'induction supplémentaire (23) au moyen de l'élément d'induction (21) et/ou l'énergie électrique peut être reçue d'un élément de contact supplémentaire (24) au moyen de l'élément de contact électrique (22).

4. Dispositif d'affichage (1) selon l'une quelconque des revendications précédentes, dans lequel un appareil de communication (25) du dispositif d'affichage (1) pour la réception, en particulier pour la réception sans fil, d'informations au moins sur l'image (16) est intégré en tant que composant électrique supplémentaire (2, 9, 10, 18, 19, 20, 21, 22, 25) dans le film (5).

5. Véhicule automobile (26) avec au moins un dispositif d'affichage (1) selon l'une quelconque des revendications 1 à 4.
